# EUROPÄISCHE PATENTSCHRIFT

(11) **EP 0 455 070 B1**
(45) Veröffentlichungstag und Bekanntmachung des Hinweises auf die Patenterteilung: **22.06.1994**
(21) Anmeldenummer: 91106333.7
(22) Anmeldetag: 19.04.1991
(51) Int. Cl.: G01D 5/24, G01L 9/12, G01L 9/00

(54) **Kapazitiver Sensor mit Frequenzausgang**
Capacitive sensor with frequency output
Capteur capacitif avec sortie de fréquence

(30) Priorität: 02.05.1990 DE 4014137
(43) Veröffentlichungstag der Anmeldung: 06.11.1991
(73) Patentinhaber: SIEMENS AKTIENGESELLSCHAFT, 80333 München (DE)
(72) Erfinder: Breimesser, Fritz, Dipl.-Ing., W-8500 Nürnberg 20 (DE); Poppinger, Manfred, Dr., W-8521 Uttenreuth (DE); Schörner, Reinhold, Dr., W-8521 Grossenseebach (DE)

(56) Entgegenhaltungen:
- EP-A- 0 195 985
- US-A- 4 091 683
- US-A- 4 344 293
- PATENT ABSTRACTS OF JAPAN, Band 10, Nr. 106 (P-449)[2163], 22. April 1986; & JP-A-60 238 715

## Beschreibung

Die Erfindung bezieht sich auf einen kapazitiven Sensor gemäß dem Oberbegriff des Anspruchs 1.

Bei kapazitiven Sensoren wird durch Einwirkung einer Meßgröße die Kapazität eines Meßkondensators verändert. Diese Kapazitätsänderung dient als Maß für die zu erfassende Meßgröße. Die Kapazitätsänderung kann abhängig von den Eigenschaften dieser Meßgröße verschiedene Ursachen haben.

Zur Messung mechanischer Größen, beispielsweise Kraft, Druck oder Beschleunigung, eignen sich insbesondere kapazitive Sensoren, bei denen unter der Wirkung der zu messenden Größe ein mit Elektroden versehener Körper relativ zu einer anderen Elektrode mechanisch ausgelenkt und die damit verbundene Kapazitätsänderung erfaßt wird. Kapazitive Sensoren zur Messung mechanischer Größen haben dabei gegenüber piezoresistiven Sensoren, bei denen eine mechanische Auslenkung eines Körpers durch eine damit verbundene Änderung des Spannungszustandes von auf oder in diesem Körper angeordneten Silizium-Widerständen erfaßt wird, den Vorteil einer geringeren Temperaturabhängigkeit und einer höheren Empfindlichkeit.

In der modernen Meßtechnik sind insbesondere solche Sensoren von Vorteil, die eine zu erfassende Meßgröße in ein frequenzanaloges elektrisches Ausgangssignal umwandeln. Frequenzsignale können weitgehend störungsfrei übertragen werden und sind ohne nachfolgende Analog-Digital-Wandlung zur digitalen Weiterverarbeitung geeignet.

Um aus einer Kapazitätsänderung durch eine Meßgröße ein frequenzanaloges Ausgangssignal zu erzeugen, ist bei einer bekannten Ausführungsform eines kapazitiven Strömungssensors für ein Kühlmittel die Meßkapazität des Sensors zusammen mit einer weiteren, fest vorgegebenen Kapazität und mehreren Widerständen und Invertern in einer Ringoszillatorschaltung zusammengeschaltet. Die Schwingungsfrequenz dieses Ringoszillators ändert sich mit der Meßkapazität und ist damit ein Maß für die in einer Kühlmittelleitung fließende Kühlmittelmenge als Meßgröße (US 4 344 293).

Bei einer weiteren bekannten Ausführungsform eines kapazitiven Sensors sind mehrere gleiche Meßkondensatoren als frequenzbestimmende Elemente zusammen mit einer gleichen Anzahl von Invertern in einem Ringoszillator geschaltet. Jede Meßkapazität ist dabei abhängig von derselben Meßgröße und ist genau einem Inverter des Ringoszillators zugeordnet. Es können auch mehrere solche Ringoszillatoren vorgesehen sein. Aus den frequenzanalogen Signalen der Ringoszillatoren wird mit Hilfe eines digitalen Zählers ein digitales Ausgangssignal für die zu bestimmende Meßgröße hergeleitet. Die Meßkondensatoren und die anderen Bestandteile des Ringoszillators sind dabei separat als diskrete Bauteile realisiert (Patent Abstracts of Japan, Vol. 10, No. 106, P-449, Seite 2163, 22. April 1986 und JP-A-60 238715).

Es ist ferner ein in Silizium integrierter kapazitiver Drucksensor mit frequenzanalogem Ausgang bekannt, bei dem eine auf einer Silizium-Membran angeordnete gemeinsame erste Elektrode mit einer zweiten und dritten Elektrode jeweils einen Meßkondensator bildet. Die zweite und dritte Elektrode sind spiegelbildlich zueinander bezüglich einer Symmetrieebene angeordnet, die senkrecht auf der Oberfläche der Silizium-Membran steht und die erste Elektrode in zwei gleiche Hälften teilt. Die Meßkapazitäten der beiden Meßkondensatoren ändern sich somit in gleicher Weise mit dem auf die Membran einwirkenden Druck. Die beiden gleichen Meßkapazitäten sind als frequenzbestimmende Elemente in einen einfachen Wien-Robinson-Oszillator geschaltet, dessen Frequenz von einer der beiden Meßkapazitäten abhängt und als frequenzanaloges Signal für den Druck ausgewertet wird (EP-A-0 195 985).

Der Erfindung liegt nun die Aufgabe zugrunde, einen kapazitiven Sensor mit frequenzanalogem Ausgang und mit mehreren Kondensatoren als frequenzbestimmenden Elementen, deren Kapazitäten von einer Meßgröße abhängen und denen jeweils ein Inverter eines Ringoszillators mit einer ungeraden Anzahl von Invertern zugeordnet ist, als in Silizium gefertigten, miniaturisierbaren Drucksensor weiterzubilden, bei dem parasitäre Kapazitäten weitgehend unterdrückt werden.

Die genannte Aufgabe wird gelöst mit den Merkmalen des Anspruchs 1.

Der kapazitive Sensor enthält einen durch den Druck relativ zu einem Grundkörper aus Silizium auslenkbaren Körper, der durch eine zentrale Verdickung einer Silizium-Membran gebildet wird. Auf dem Silizium-Grundkörper sind mehrere Elektroden angeordnet, die zusammen mit dem auslenkbaren Silizium-Körper jeweils einen Meßkondensator bilden. Dieser Sensor kann mit Hilfe der hochentwickelten Silizium-Mikrostrukturtechnik besonders leicht hergestellt und strukturiert werden.

Zur Verringerung von Streukapazitäten sind die Elektroden auf oder in einer wenigstens teilweise freitragenden Isolatorschicht über dem Silizium-Grundkörper angeordnet. Dadurch wird die Kapazität zwischen den Elektroden und dem Grundkörper verringert und die Empfindlichkeit des Sensors erhöht. Zur Erhöhung der mechanischen Stabilität ist die Isolatorschicht vorzugsweise auf mehreren Sockeln abgestützt.

Der Ringoszillator kann vorzugsweise in den Silizium-Grundkörper integriert werden. Die zur Herstellung des auslenkbaren Körpers in der mikromechanischen Technologie erforderlichen Ätzschritte sowie die zur Herstellung des für die Ringoszillatoren erforderlichen integrierten Schaltkreises können dann auf unterschiedlichen Silizium-Wafern erfolgen. Dadurch entfallen beispielsweise zusätzliche Prozeßschritte, die erforderlich sind, um die in den Silizium-Wafer integrierten elektronischen Schaltkreise vor den zur mechanischen Strukturierung erforderlichen Ätzprozessen zu schützen.

Es kann außerdem eine zweite Kondensatoranordnung sowie ein ihr zugeordneter zweiter Ringoszillator vorgesehen sein. Dabei sind Kondensatoranordnungen vorteilhaft, bei denen sich eine von der Meßgröße gegenläufige Abhängigkeit der Ausgangsfrequenzen der beiden Ringoszillatoren ergibt. Aus den beiden frequenzanalogen Signalen kann dann eine Differenzfrequenz oder ein Frequenzverhältnis als digitales Signal gebildet werden. Dadurch wird die Empfindlichkeit erhöht und die Abhängigkeit von Störgrößen, wie beispielsweise der Temperatur, verringert.

Zur weiteren Erläuterung der Erfindung wird auf die Zeichnung verwiesen, in deren
- Figur 1: ein kapazitiver Drucksensor gemäß der Erfindung schematisch in einem Schnittbild veranschaulicht ist.
- Figur 2: zeigt eine Elektrodenanordnung auf einem Grundkörper eines kapazitiven Drucksensors in einer Draufsicht und in
- Figur 3: ist das Schaltbild einer zum Erzeugen eines frequenzanalogen Ausgangssignals bevorzugten Ringoszillator-Schaltung dargestellt. Anhand der
- Figuren 4 und 5: wird eine besonders vorteilhafte Ausgestaltung der auf dem Grundkörper befindlichen Elektrodenanordnung jeweils in einem Schnittbild veranschaulicht.

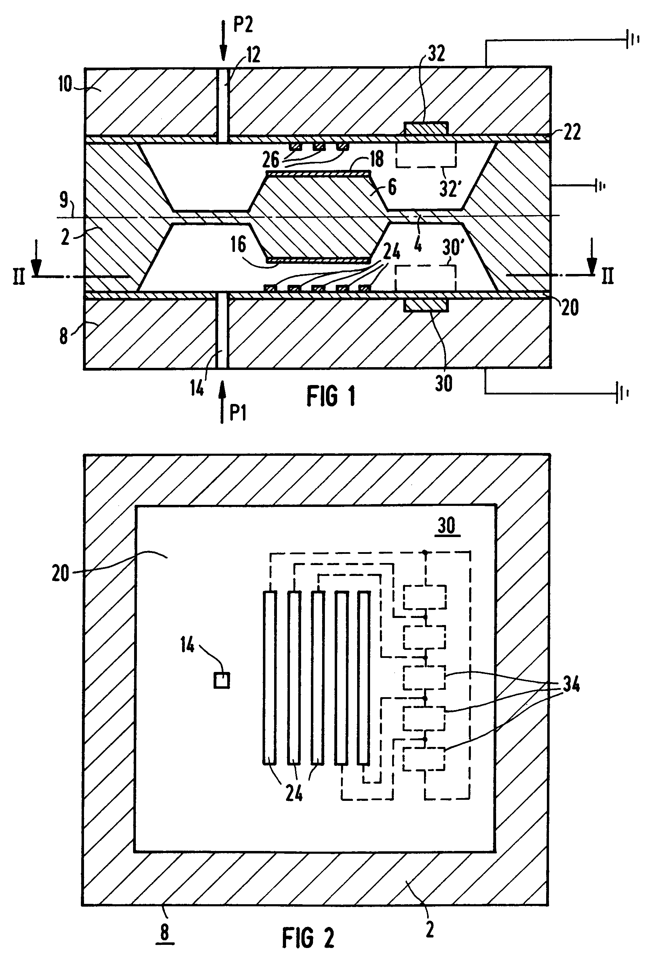

Gemäß Figur 1 enthält ein kapazitiver Drucksensor einen mit einer Elektrode 16 versehenen und relativ zu einem feststehenden Silizium(Si)-Grundkörper 8 auslenkbaren Si-Körper 6. Der Si-Körper 6 ist als Teil einer Si-Membran 4 ausgebildet und über diese Si-Membran 4 mit einem Stützrahmen 2 verbunden. Der Si-Körper 6 wird durch eine Verdickung im zentralen Bereich der Si-Membran 4 gebildet und hat eine dem Si-Grundkörper 8 zugewandte, parallel zu der durch die Si-Membran 4 aufgespannten Ebene orientierte Flachseite. Auf dieser Flachseite ist die Elektrode 16 angeordnet. Durch die Verdickung wird bewirkt, daß bei einer Auslenkung der Si-Membran 4 die Elektrode 16 im wesentlichen nur parallel zur Richtung der Auslenkung verschoben wird. Außerdem werden die mechanischen Eigenschaften der Membran 4 nicht durch die Elektrode 16 beeinflußt.

Der Stützrahmen 2, die Membran 4 und der Körper 6 bestehen vorzugsweise aus monokristallinem Silizium mit einer (100)-Oberfläche. Membran 4 und Körper 6 können dann durch anisotropes Ätzen, beispielsweise mit einer Mischung aus Ethylendiamin und Pyrocatechol EDP oder Kaliumhydroxid KOH, hergestellt werden. Die Flanken zwischen der Membran 4 und dem Körper 6 sowie dem Stützrahmen 2 werden dann durch (111)-Flächen gebildet, so daß sich eine Membran 4 in Gestalt eines rechteckigen Rahmens ergibt, über den sich im Zentrum der Körper 6 als Sockel in Gestalt eines Pyramidenstumpfes erhebt.

Im Beispiel der Figur ist eine auf dem Körper 6 aufgedampfte und beispielsweise aus Aluminium Al bestehende Elektrode 16 dargestellt. Der Stützrahmen 2, die Membran 4 und der Körper 6 können jedoch auch aus hochdotiertem Silizium bestehen, so daß eine eigens auf die Oberfläche des Körpers 6 aufgedampfte Elektrode nicht erforderlich ist.

Der Stützrahmen 2 ist über eine Isolatorschicht 20, beispielsweise Siliziumdioxid SiO₂ oder Siliziumnitrid Si₃N₄, vakuumdicht auf den aus Silizium bestehenden Grundkörper 8 aufgebracht.

Der Grundkörper 8 ist mit einer Durchlaßöffnung 14 versehen, über die ein zu messender Druck P1 beispielsweise durch ein inkompressibles Fluid auf die Membran 4 übertragen wird.

Auf der Isolierschicht 20 des Grundkörpers 8 sind gegenüber der Elektrode 16 vorzugsweise mehrere Elektroden 24 angeordnet, die voneinander elektrisch isoliert sind und zusammen mit der Elektrode 16 eine ungerade Anzahl, beispielsweise 5, Kondensatoren bilden. Diese Kondensatoren sind Bestandteil eines aus einer ungeraden Anzahl von Invertern gebildeten Ringoszillators 30, der vorzugsweise ebenfalls in den aus Silizium bestehenden Grundkörper 8 integriert ist. Durch diese Maßnahme wird erreicht, daß die Ätzprozesse zur Herstellung der Membran 4 und die technologischen Prozesse zur Integration des Ringoszillator-Schaltkreises auf unterschiedlichen Wafern stattfinden können.

Im Beispiel der Figur ist ein Differenzdruck-Sensor mit symmetrischem Aufbau veranschaulicht, bei dem der Stützrahmen 2, die Membran 4 und der Körper 6 eine beispielsweise spiegelsymmetrisch zu einer parallel zur Ebene der Membran 4 verlaufenden Symmetrieebene 9 gestaltet ist. Der Körper 6 hat dann die Form zweier zusammengesetzter Pyramidenstumpfe. Der Stützrahmen 2 ist zwischen dem Grundkörper 8 und einer Deckplatte 10 angeordnet, die ebenfalls mit einer Durchlaßöffnung 12 versehen ist, über die die Membran mit einem Druck P2 beaufschlagt werden kann. Bei einem entsprechenden Absolutdruck-Sensor ist der Raum zwischen Deckplatte 10 und Membran 4 evakuiert. In einem Ausführungsbeispiel ist bei einem Drucksensor für den Meßbereich 10⁴ Pa eine Membran 4 mit einer Dicke von etwa 50 »m und einer Rahmenbreite von etwa 1 mm vorgesehen. Die Grundfläche des pyramidenstumpfförmigen Körpers 6 beträgt in diesem Beispiel etwa 4 x 4 mm² und der Abstand zwischen der Elektrode 16 und den Elektroden 24 beträgt etwa 5 bis 10 »m.

Der Körper 6 und die Deckplatte 10 sind auf ihren einander zugewandten Flachseiten ebenfalls mit Elektroden 18 bzw. 26 versehen, die ebenfalls Kondensatoren bilden, die einem weiteren Ringoszillator 32 zugeschaltet sind. Dieser Ringoszillator 32 ist vorzugsweise ebenfalls in eine aus Silizium bestehende Deckplatte 10 integriert. Die Ringoszillatoren 30 und 32 werden jeweils durch eine ungerade, vorzugsweise jeweils der Anzahl der Elektroden 24 bzw. 26 entsprechenden Anzahl von Invertern gebildet. Im bevorzugten Ausführungsbeispiel der Figur stimmt die Zahl der Elektroden 24 mit der Zahl der Elektroden 26 nicht überein. So können beispielsweise 5 Elektroden 24 und 3 Elektroden 26 vorgesehen sein. Durch diese Maßnahme wird erreicht, daß die Ringoszillatoren 30 und 32 mit unterschiedlichen Grundfrequenzen schwingen, so daß unerwünschte Kopplungen unterdrückt werden.

Eine Auslenkung der Membran 4, im Beispiel der Figur nach oben wenn der Druck P1 größer als der Druck P2 ist, bewirkt jeweils eine Verringerung der Kapazität der von den Elektroden 16 und 24 gebildeten Kondensatoren und jeweils eine Vergrößerung der Kapazität der von den Elektroden 18 und 26 gebildeten Kondensatoren. Diese Kapazitätsänderungen führen somit zu einer gegenläufigen Abhängigkeit der Ausgangsfrequenzen f₃₀ und f₃₂ der Ringoszillatoren 30 bzw. 32 von der Auslenkung. Durch Auswertung der Differenzfrequenz oder des Frequenzverhältnisses können sowohl die Empfindlichkeit erhöht als auch die Querempfindlichkeiten verringert werden.

Der im Beispiel der Figur dargestellte spiegelsymmetrische Aufbau des Stützrahmens 2, der Membran 4 und des Körpers 6 ist nicht notwendig, da die Ausgangsfrequenzen f₃₀ und f₃₂ der Ringoszillatoren 30 bzw. 32 weder im nichtausgelenkten Zustand der Membran 4 noch hinsichtlich ihrer betragsmäßigen Abhängigkeit von der Auslenkung der Membran 4 übereinstimmen müssen.

Die Ringoszillatoren 30 und 32 können auch als separate, in der Figur gestrichelt eingezeichnete hybride Chips 30′ und 32′ auf der Oberfläche des Grundkörpers 8 angeordnet sein. Die Chips 30′ und 32′ sind beispielsweise auf die Oberfläche geklebt und an entsprechende Kontaktpads der Elektroden 24 bzw. 26 gebondet oder verlötet. Durch diese Maßnahme kann der technologisch aufwendige IC-Herstellungsprozeß auf einem separaten Si-Wafer mit einer besseren Ausnutzung der Wafer-Fläche erfolgen.

Figur 2 zeigt eine Anordnung der Elektroden 24 auf dem Grundkörper 8 in einer Draufsicht. Im Grundkörper 8 ist der Ringoszillator 30, der aus einer der Anzahl der Elektroden 24 entsprechenden Anzahl von Invertern 34 aufgebaut ist, integriert. Die Inverter 3 können sowohl in MOS-Technologie oder in bipolarer Technologie hergestellt sein. Die Leiterbahnen, die von den Elektroden 24 zu den Inverterausgängen führen, sowie die Inverter 34 sind in der Figur gestrichelt dargestellt.

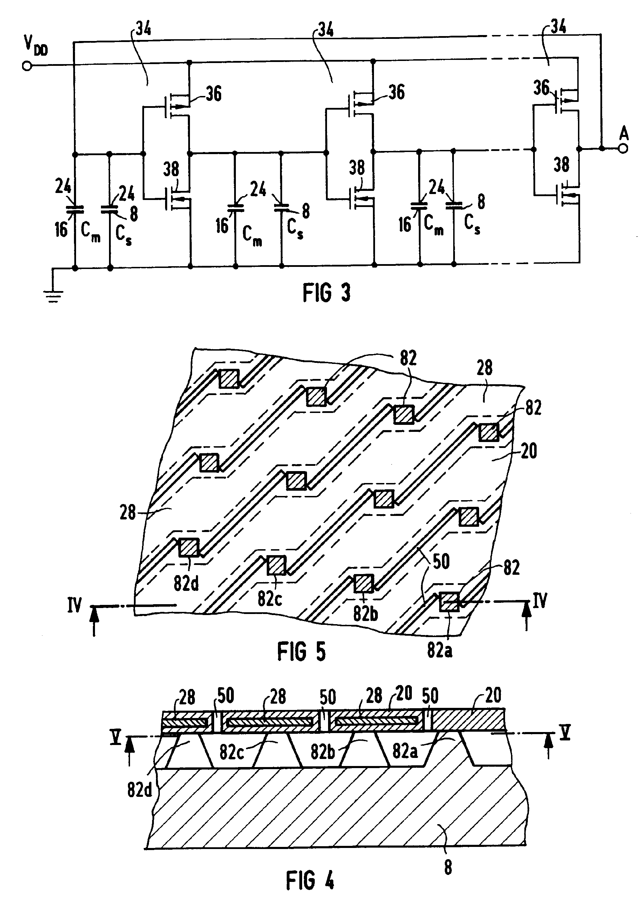

Gemäß Figur 3 ist in einer bevorzugten Ausführungsform ein Ringoszillator vorgesehen, der eine ungerade Anzahl von CMOS-Invertern 34 enthält, die jeweils einen p-Kanal-Transistor 36 und einen n-Kanal-Transistor 38 enthalten. Jeder Inverterausgang ist mit einer Elektrode 24 verbunden, so daß jeweils an den Inverterausgängen ein aus einer Elektrode 24 und der auf Massepotential befindlichen Elektrode 16 bestehender Kondensator mit der Kapazität Cₘ nach Masse geschaltet ist. Die Kapazität Cₘ dieser Kondensatoren beeinflußt jeweils die Gatterlaufzeit des ihm zugeordneten Inverters 34 und somit die Frequenz des Ringoszillators. Da diese Kapazität Cₘ von der Auslenkung des die Elektroden 16 tragenden Körpers abhängig ist, wird die mechanische Auslenkung des Körpers direkt in eine Frequenzänderung am Ausgang A des Ringoszillators umgewandelt.

Den Kapazitäten Cₘ sind noch parasitäre Kapazitäten Cₛ parallelgeschaltet, die durch die zwischen dem Grundkörper 8 (Figur 1) und den Elektroden 24 jeweils gebildeten Kondensatoren entsteht. Diese parasitären Kapazitäten Cₛ sind jedoch unerwünscht, da sie die Empfindlichkeit des Drucksensors verringern.

Zur Verringerung dieser parasitären Kapazitäten Cₛ sind in allen Ausführungsformen die dem Grundkörper zugeordneten Elektroden in oder auf einer wenigstens teilweise freitragenden Isolatorschicht über dem Grundkörper angeordnet. (Die in der Ausführungsform gemäß FIG. 1 dazu entsprechend den im folgenden beschriebenen Ausführungsformen gemäß den FIG. 4 und 5 vorzusehenden Ausnehmungen in dem Grundkörper 8 in einem Bereich unterhalb der Elektroden 24 und in der Deckplatte 10 in einem Bereich unterhalb der Elektroden 26 sind in der FIG. 1 nicht dargestellt.)

In einer weiteren Ausführungsform gemäß Figur 4 sind die dem Grundkörper 8 zugeordneten Elektroden 28 über eine Isolatorschicht 20 auf pyramidenstumpfförmigen Sockeln 82a, b, c, d abgestützt.

In Figur 5 ist ein Schnittbild eines parallel zu der mit den Elektroden 28 versehene Oberfläche des Grundkörpers 8 verlaufenden Flächenausschnitts dargestellt. Die Isolatorschicht 20 ist über mehrere Sockel freitragend auf dem Grundkörper 8 abgestützt und mit mehreren beispielsweise in [100]-Richtung verlaufenden Schlitzen 50 versehen. Diese Schlitze werden zur Unterätzung der Isolationsschicht 20 benötigt und ermöglichen den Angriff des anisotropen Ätzmittels auf das Siliziumsubstrat der Grundplatte 8. Die vorher geeignet strukturierten Elektroden 28, die in der Figur gestrichelt eingezeichnet sind, erstrecken sich im Beispiel der Figur im wesentlichen parallel zu den Schlitzen 50 und sind voneinander durch die Schlitze 50 und die über den Sockel 82 zusammenhängende Isolationsschicht 20 elektrisch isoliert. Unmittelbar über dem Sockel befindet sich in diesem Beispiel keine Elektrode 28. Durch diese Maßnahmen werden die parasitären Kapazitäten Cₛ weitgehend verringert.

Die Ausmaße der pyramidenförmigen Sockel 82 hängen von der Dauer der Einwirkung des anisotropen Ätzmittels ab und werden bei fortschreitendem Ätzprozeß kleiner. In einer weiteren Ausgestaltung der Erfindung wird der Ätzprozeß soweit fortgeführt, daß auch diese Sockel 82 verschwinden und sich eine freitragende Isolatorschicht 20 ergibt, die nur noch an ihren äußeren Rändern mit dem Grundkörper 8 verbunden ist. Die Elektroden 28 sind dann frei über dem Grundkörper 8 angeordnet und können auch hinsichtlich ihrer geometrischen Form frei gestaltet werden.

## Patentansprüche

1. Kapazitiver Sensor mit Frequenzausgang und mit mehreren Kondensatoren als frequenzbestimmenden Elementen, deren jeweilige Kapazität Cₘ von einer Meßgröße abhängt und denen jeweils ein Inverter (34) eines Ringoszillators (30) mit einer ungeraden Anzahl von Invertern (34) zugeordnet ist, **dadurch gekennzeichnet**, daß
a) die jeweilige Kapazität Cₘ der Kondensatoren von einer durch einen Druck als Meßgröße verursachten mechanischen Auslenkung eines Silizium-Körpers (6) relativ zu einem mit Elektroden (24) versehenen Silizium-Grundkörper (8) abhängt, wobei dieser Silizium-Körper (6) durch eine zentrale Verdickung einer Silizium-Membran (4) gebildet ist,
und
b) die Elektroden (24) auf oder in einer wenigstens teilweise freitragenden Isolatorschicht (20) über dem Silizium-Grundkörper (8) angeordnet sind.

2. Kapazitiver Sensor nach Anspruch 1, **dadurch gekennzeichnet**, daß der Ringoszillator (30) auf oder in dem Grundkörper (8) angeordnet ist.

3. Kapazitiver Sensor nach Anspruch 1 oder 2, **dadurch gekennzeichnet**, daß der Ringoszillator (30) in den Grundkörper (8) integriert ist.

4. Kapazitiver Sensor nach Anspruch 1 oder 2, **dadurch gekennzeichnet**, daß der Ringoszillator als hybrider Chip (30′) auf dem Grundkörper (8) angeordnet ist.

5. Kapazitiver Sensor nach einem der vorhergehenden Ansprüche, **dadurch gekennzeichnet**, daß eine weitere, wenigstens einen Kondensator mit einer von der Meßgröße abhängigen Kapazität enthaltende Kondensatoranordnung (18, 26) vorgesehen ist, deren Kondensator oder Kondensatoren als frequenzbestimmendes Element bzw. frequenzbestimmende Elemente einem zweiten Ringoszillator (32) zugeschaltet sind.

6. Kapazitiver Sensor nach Anspruch 5, **dadurch gekennzeichnet**, daß Kondensatoranordnungen (16, 24 und 18, 26) derart vorgesehen sind, daß sich eine von der Meßgröße gegenläufige Abhängigkeit der Ausgangsfrequenzen f₃₀ und f₃₂ der beiden Ringoszillatoren (30 bzw. 32) ergibt.

7. Kapazitiver Sensor nach Anspruch 5 oder 6, **dadurch gekennzeichnet**, daß der Körper (6) zwischen dem Grundkörper (8) und einer ebenfalls mit Elektroden (26) versehenen Deckplatte (10) angeordnet ist.

## Claims

1. Capacitive sensor having a frequency output and several capacitors as frequency-determining elements, the respective capacitance Cₘ of which capacitors depends upon a measurable quantity, there being assigned to each of the capacitors an inverter (34) of a ring oscillator (30) having an uneven number of inverters (34), characterised in that
a) the capacitance Cₘ of the each of the capacitors depends upon a mechanical deflection of a silicon body (6) relative to a silicon base body (8) provided with electrodes (24), whereby this silicon body (6) is formed by a central thickening of a silicon membrane (4) and its mechanical deflection is caused by a pressure which is the measurable quantity, and
b) the electrodes (24) are arranged above the silicon base body (8) on or in an insulation layer (20) which is at least partly unsupported.

2. Capacitive sensor according to claim 1, characterised in that the ring oscillator (30) is arranged on or in the base body (8).

3. Capacitive sensor according to claim 1 or 2, characterised in that the ring oscillator (30) is integrated into the base body (8).

4. Capacitive sensor according to claim 1 or 2, characterised in that the ring oscillator is arranged on the base body (8) as a hybrid chip (30′).

5. Capacitive sensor according to one of the preceding claims, characterised in that there is provided a further capacitor arrangement (18, 26) containing at least one capacitor having a capacitance dependent upon the measurable quantity, with the capacitor or capacitors of this arrangement being connected, as the frequency-determining element or elements, to a second ring oscillator (32).

6. Capacitive sensor according to claim 5, characterised in that capacitor arrangements (16, 24 and 18, 26) are provided so that an opposite dependence of the output frequencies f₃₀ and f₃₂ of the two ring oscillators (30 and 32, respectively) on the measurable quantity results.

7. Capacitive sensor according to claim 5 or 6, characterised in that the body (6) is arranged between the base body (8) and a cover plate (10) also provided with electrodes (26).

## Revendications

1. Capteur capacitif comportant une sortie de fréquence et plusieurs condensateurs en tant qu'éléments déterminant la fréquence et dont les capacités respectives Cₘ dépendent d'une grandeur de mesure et à chacun desquels est associé un inverseur (34) d'un oscillateur en anneau (30) à un nombre d'inverseurs (34) impair, caractérisé par le fait que
a) la capacité respective Cₘ des condensateurs dépend d'une déviation mécanique, provoquée par une pression en tant que grandeur de mesure, d'un corps en silicium (6) par rapport à un corps de base en silicium (8) équipé d'électrodes (24), ce corps en silicium (6) étant formé par un épaississement central d'une membrane de silicium (4), et
b) les électrodes (24) sont disposées sur ou dans une couche isolante (20) au moins partiellement autoportante, au-dessus du corps de base en silicium (8).

2. Capteur capacitif suivant la revendication 1, caractérisé par le fait que l'oscillateur en anneau (30) est disposé sur ou dans le corps de base (8).

3. Capteur capacitif suivant la revendication 1 ou 2, caractérisé par le fait que l'oscillateur en anneau (30) est intégré dans le corps de base (8).

4. Capteur capacitif suivant la revendication 1 ou 2, caractérisé par le fait que l'oscillateur en anneau est disposé en tant que microplaquette hybride (30') sur le corps de base (8).

5. Capteur capacitif suivant l'une des revendications précédentes, caractérisé par le fait qu'il est prévu un autre dispositif à condensateurs (18, 26), qui comporte au moins un condensateur possédant une capacité dépendant de la grandeur de mesure et dont le ou les condensateurs sont raccordés, en supplément, en tant qu'élément(s) déterminant la fréquence, à un second oscillateur en anneau (32).

6. Capteur capacitif suivant la revendication 5, caractérisé par le fait qu'il est prévu des dispositifs à condensateurs (16, 24 et 18, 26) qui sont tels qu'on obtient une dépendance, en sens inverse de la grandeur de mesure, des fréquences de sortie f₃₀ et f₃₂ des deux oscillateurs en anneau (30 et 32).

7. Capteur capacitif suivant la revendication 5 ou 6, caractérisé par le fait que le corps (6) est disposé entre le corps de base (8) et une plaque de revêtement (10) également équipée d'électrodes (26).
